# EUROPEAN PATENT APPLICATION

(11) **EP 4 749 775 A1**
(43) Date of publication of application: **27.05.2026**
(21) Application number: 25210395.7
(22) Date of filing: 22.10.2025
(51) Int. Cl.: H01M 50/103, H01M 50/119, H01M 50/15, H01M 50/159, H01M 50/176, H01M 50/186, H01M 50/188, H01M 50/545, H01M 50/553, H01M 50/562

(54) **HOUSING OF BATTERY CELL AND BATTERY CELL INCLUDING THE SAME**

(30) Priority: 25.11.2024 CN 202422878842 U
(71) Applicant: AESC Japan Ltd., Yokohama-shi, Kanagawa 220-0012 (JP)
(72) Inventor: NI, Haoqi, Jiangyin City, Wuxi City, 214443 (CN)
(74) Representative: Becker, Eberhard

(57) **Abstract**

A housing (10) of a battery cell (100) is provided, which includes: a housing body, having a through hole (11), , in a first direction (A), the housing body includes a first side (a) and a second side (b) opposite to each other; a positive terminal (3), passing through the through hole (11); an upper insulation member (5), disposed between the positive terminal (3) and the housing body to insulate the positive terminal (3) from the housing body; a negative terminal (4), including a first terminal layer (41) and a second terminal layer (42) disposed along the first direction (A), the first terminal layer (41) and the second terminal layer (42) are electrically connected, the second terminal layer (42) is electrically connected with the first side (a), the material of the first terminal layer (41) is different from the second terminal layer (42).

## Description

### BACKGROUND

### Technical Field

The present disclosure relates to a housing of a battery cell and a battery cell including the same.

### Description of Related Art

A prismatic-housing battery cell generally at least includes a cell housing and an electrode assembly disposed within the cell housing. The electrode assembly leads out positive electrodes and negative electrodes, which are then connected to positive terminals and negative terminals located on a surface of the cell housing. The cell housing is typically made of aluminum alloy.

### SUMMARY

The present disclosure aims to address the technical problem of overcoming the shortcomings of the existing technology, specifically the low energy density and high production and assembly costs of prismatic-housing battery cells. The present disclosure provides a housing of a battery cell and a battery cell including the same.

The present disclosure solves the above technical problems through the following technical solutions:

A housing of a battery cell, which includes:

A housing body, provided with a through hole, wherein a material of the housing body is steel, a thickness direction of the housing body is a first direction, in the first direction, the housing body includes a first side and a second side opposite to each other;

A positive terminal, passing through the through hole;

An upper insulation member, disposed between the positive terminal and the housing body to insulate the positive terminal from the housing body;

A negative terminal, including a first terminal layer and a second terminal layer disposed along the first direction, wherein the first terminal layer and the second terminal layer are electrically connected, the second terminal layer is electrically connected with the first side, a material of the second terminal layer is steel, and a material of the first terminal layer is different from the second terminal layer.

The material of the housing body of the housing of the battery cell adopts steel material instead of aluminum alloy, which may ensure a structural strength under the premise of reduced thickness, thereby improving the space utilization within the housing of the battery cell composed of the housing body, and improving the energy density of the obtained battery cell.

The negative terminal of the housing includes two parts: the first terminal layer and the second terminal layer. The second terminal layer is made of steel and is electrically connected to the first side of the housing body, while the first terminal layer has a different material from the second terminal layer and is configured for connecting with external electrical connection components. The negative electrode of the electrode assembly of the battery cell accommodated in the housing body is led outward through the second side of the housing body, the second terminal layer and the first terminal layer of the negative terminal. This structural setting method may reduce the required components of the housing of the battery cell, simplify the structure, and reduce production and assembly costs.

Meanwhile, the housing body made of steel is negatively charged, which may prevent the housing body from rusting.

Preferably, the first side has a recessed portion formed by recessing toward the second side, and at least a portion of the second terminal layer is accommodated in the recessed portion.

Through setting the recessed portion that may partially accommodate the second terminal layer on the surface of the housing body that is electrically connected with the second terminal layer, on one hand, a recessed structure of the recessed portion may be utilized to position the second terminal layer, and may also wrap the second terminal layer to increase the connection strength between the negative terminal including the second terminal layer and the housing body, on the other hand, it is also possible to reduce the space occupied by the negative terminal including the second terminal layer on the first side of the housing body, thereby further increasing the space utilization of the battery cell.

Preferably, a recess depth of the recessed portion is greater than or equal to half of a thickness of the housing body.

The recess depth of the recessed portion is at least greater than half of the thickness of the housing body to ensure that the recessed portion has a sufficient depth for accommodating and positioning the second terminal layer, thereby further improving the positioning accuracy of the second terminal layer and the connection strength. Moreover, since the housing body is made of steel material, the structural strength thereof is relatively high, and processing deeper recessed portions on the surface of the housing body will not affect the dimensional accuracy and surface flatness of the housing body.

Preferably, the recess depth of the recessed portion is D, and 0.8mm≤D≤2mm.

By ensuring that the recess depth of the recessed portion is greater than or equal to 0.8mm, it is possible to prevent the occurrence of insufficient penetration depth and inadequate welding strength when the second terminal layer of a negative electrode terminal is connected to the housing body through welding methods such as laser welding, due to the recess being too shallow. In the meantime, by making the recess depth of the recessed portion less than or equal to 2mm, it is possible to prevent the strength from reducing at a rounded connection formed by material extension deformation between the recessed portion and the non-recessed portion due to the recessed portion being too deep, thus improving the machinability and manufacturability.

Preferably, the second side has a protrusion portion corresponding to a position of the recessed portion.

Through setting a protrusion portion at a position corresponding to the recessed portion on the second side of the housing body, the processing difficulty may be reduced, that is, while processing the recessed portion on the outer side of the housing body, the protrusion portion is formed on an opposite surface of the housing body. Furthermore, a surface that protrudes more relative to other surfaces of the housing body is also favorable for being connected with a negative electrode tab.

Preferably, the positive terminal and the negative terminal are both disposed on the first side of the housing body, and on the second side, the protrusion portion has the same height as the positive terminal.

Through the structural setting where the protrusion portion has the same height as the positive terminal, a balance may be maintained between a positive electrode tab of the electrode assembly used for connecting the positive terminal and the negative electrode tab used for connecting the negative terminal, thereby avoiding the occurrence of unstable connection caused by one end being pulled, and on the other hand, the connection difficulty may be reduced as well.

Preferably, a gap is provided between an inner peripheral side surface of the recessed portion and an outer peripheral side surface of the second terminal layer. The gap has a dimension of M, and 0.1mm≤M≤0.2mm.

When providing a gap between the inner peripheral side surface of the recessed portion and the outer peripheral side surface of the second terminal layer to facilitate disposing the negative terminal in the recessed portion, the gap should be less than or equal to 0.2mm to avoid the gap being too large and affecting the positioning of the second terminal layer by the recessed portion. Meanwhile, the gap should be greater than or equal to 0.1mm to avoid the gap being too small and affecting the pre-configuration of the second terminal layer relative to the recessed portion.

Preferably, on the first side, the surface of the second terminal layer is coplanar with the surface of the housing body; and/or,

On the first side, the surface of the first terminal layer protrudes from the surface of the housing body.

By making the outer surface of the second terminal layer coplanar with the first side of the housing body in the first direction, it is possible to facilitate clamping and positioning during the welding process. Meanwhile, the outer surface of the first terminal layer protrudes from the first side surface of the housing body, thus facilitating welding between the outer surface of the first terminal layer and external electrical connection components.

Preferably, along the first direction, a projection of the first terminal layer on the surface of the second terminal layer is located within a range of the second terminal layer.

By making the projection of the first terminal layer on the surface of the second terminal layer located within the range of the second terminal layer, laser penetration welding may be performed on a portion of the second terminal layer surface not covered by the first terminal layer, so that the second terminal layer and the housing body are welded and connected through laser penetration welding.

Preferably, along the first direction, a region where the projection of the second terminal layer is not covered by the projection of the first terminal layer is an annular region disposed along an edge of the projection of the second terminal layer.

The region on the second terminal layer not covered by the first terminal layer is ringshaped, and laser penetration welding of the second terminal layer may be performed through the annular region, which may improve the welding strength between the second terminal layer and the housing body.

Preferably, a minimum width dimension of the annular region is Nmin, Nmin≥0.4mm;

And/or, a maximum width dimension of the annular region is Nmax, Nmax≤0.8mm.

The minimum width dimension Nmin of the annular region is disposed to be greater than or equal to 0.4mm, avoiding the width dimension of the annular region being too small to provide a sufficient space for laser penetration welding. Meanwhile, the maximum width dimension Nmax of the annular region is disposed to be less than or equal to 0.8mm, avoiding the width dimension of the annular region being too large and causing an area dimension of the first terminal layer to be too small, affecting the welding with external electrical connection components.

Preferably, the housing further includes an annular sealing member. The annular sealing member is fixed between the second terminal layer and the first side of the housing body.

When welding the negative electrode tab of the electrode assembly to the second side of the housing body, there exists the possibility of welding through the housing body, resulting in a breach between the first side and second side of the housing body, which may cause an electrolyte located on the second side to leak into the first side. To address this problem, the annular sealing member is disposed between the second terminal layer and the first side of the housing body to seal the first side region surrounded by the annular sealing member. In this way, when the negative electrode tab of the electrode assembly is welded with the housing body in the region surrounded by the annular sealing member, even if the housing body is welded through during the welding process, after the electrolyte leaks to the first side of the housing body, the electrolyte is also located within the range surrounded by the annular sealing member and cannot leak further.

Preferably, the welding region between the second terminal layer and the housing body is located outside the annular sealing member.

The welding region of the second terminal layer with the housing body is located on the outer side of the annular sealing member, which means that the projection of the welding region of the second terminal layer with the housing body on the surface of the housing body is located within the range sealed by the annular sealing member.

Specifically, when the second terminal layer of the negative terminal is welded with the first side of the housing body, there is a possibility of welding through the second terminal layer, causing the electrolyte located on the first side of the housing body to continue to leak further through the welded-through second terminal layer. By setting the welding region of the second terminal layer and the housing body on the outer side of the annular sealing member, it is possible to prevent the electrolyte within the range surrounded by the annular sealing member from leaking further.

Preferably, the surface of the second terminal layer facing the first side and/or the first side further has a sealing groove for accommodating the annular sealing member.

Through setting the sealing groove on the second terminal layer or the first side surface of the housing body to accommodate the annular sealing member, the annular sealing member may be pre-positioned before the second terminal layer is connected with the housing body, avoiding position shift of the annular sealing member that affects the sealing effect.

Preferably, in a second direction perpendicular to the first direction, one of the upper insulation member and the housing body has a positioning portion that protrudes outward, and the other has an accommodating portion that corresponds to and fits the positioning portion.

Due to the housing body being made of steel and being relatively thin in thickness, it is not feasible to create a deep recess on the surface of the housing body to accommodate the upper insulation member and the positive terminal for the purpose of preventing rotation. Therefore, a positioning portion extending along the second direction is disposed between the upper insulation member and the housing body to correspond to and fit the accommodating portion, so as to improve the anti-rotation capability of the upper insulation member relative to the housing body by providing an additional contact area.

Preferably, the housing body includes a top cover and a side housing. The top cover is electrically connected with an opening of the side housing, and together enclose to form an accommodating space.

The housing body forms the accommodating space through a combination of the top cover and the side housing for accommodating the electrode assembly of the battery cell. The positive terminal and the negative terminal may be disposed on the top cover or the side housing according to actual position requirements to lead out the positive electrode and negative electrode of the electrode assembly accommodated in the housing body.

Preferably, the material of the housing body and the second terminal layer are both 304 stainless steel; and/or,

In the first direction, the negative terminal has a rectangular shape, and rounded corners are disposed at four corners of the negative terminal; and/or,

On the first side, the positive terminal has the same height as the first terminal layer; and/or,

A thickness of the second terminal layer is T₁, 0.6mm≤T₁≤1mm; and/or,

A thickness of the first terminal layer is T₂, 0.6mm≤T₂≤1mm; and/or,

The thickness of the housing body is T₃, 0.8mm≤T₃≤1.2mm.

The housing body and the second terminal layer are specifically made of 304 stainless steel to obtain a relatively better structural strength, and the corrosion resistance performance may also be further enhanced.

The negative terminal has a rectangular shape in the first direction to have a better anti-rotation capability. The four corners of the negative terminal are disposed with rounded corners, which may avoid damage to other components caused by sharp corner structures.

The thickness of the second terminal layer is set to be greater than or equal to 0.6mm to prevent insufficient inherent strength caused by the insufficient thickness and to mitigate difficulties in connecting with other components. Furthermore, the thickness of the second terminal layer is set to be less than or equal to 1mm to achieve weight reduction and cost efficiency to the greatest extent possible, while still satisfying the requirements for strength and connectivity with other components.

The thickness of the first terminal layer is set to be greater than or equal to 0.6 mm to prevent insufficient inherent strength caused by the insufficient thickness and to mitigate difficulties in connecting with other components. Simultaneously, the thickness of the first terminal layer is set to be less than or equal to 1 mm to achieve weight reduction and cost efficiency to the greatest extent possible, while still satisfying the requirements for strength and connectivity with other components.

The thickness of the housing body is set to be greater than or equal to 0.8mm to prevent insufficient strength caused by the insufficient thickness. Concurrently, the thickness of the housing body is set to be less than or equal to 1.2mm to optimize weight reduction and cost efficiency while ensuring the strength requirements are met.

A battery cell, which includes:

The housing of the battery cell as described above.

The positive progressive effects of the present disclosure lie in:
(1) By using steel to replace aluminum alloy as the material adopted for the housing body, the structural strength may be ensured under the premise of reduced thickness, the space utilization of the battery cell in the housing may be improved, and the energy density of the obtained battery cell may be increased.
(2) The negative terminal of the housing includes two parts: the first terminal layer and the second terminal layer, leading the negative electrode of the electrode assembly outward through the housing body, the second terminal layer and the first terminal layer of the negative terminal, thereby reducing the required components of the housing of the battery cell, simplifying the structure, and reducing production and assembly costs.
(3) The housing body is negatively charged, which may prevent the housing body from rusting.

### BRIEF DESCRIPTION OF THE DRAWINGS

FIG. 1 is a structural schematic view of a battery cell according to Embodiment 1 of the present disclosure.
FIG. 2 is an exploded structural view of the battery cell of Embodiment 1 of the present disclosure.
FIG. 3 is a structural schematic view of a top cover of Embodiment 1 of the present disclosure.
FIG. 4 is an exploded structural view of a top cover portion of a housing of Embodiment 1 of the present disclosure.
FIG. 5 is a structural top view of the top cover portion of the housing of Embodiment 1 of the present disclosure.
FIG. 6 is a cross-sectional view taken along section C-C in FIG. 5.
FIG. 7A is a cross-sectional view (I) taken along section D in FIG. 6.
FIG. 7B is a cross-sectional view (II) taken along section D in FIG. 6.
FIG. 8 is an exploded structural view of a negative terminal and a top cover of Embodiment 1 of the present disclosure.
FIG. 9 is a structural schematic view of the top cover portion of the housing of Embodiment 1 of the present disclosure.
FIG. 10 is a schematic view of a welding sealing region layout on a surface of a recessed portion of the top cover according to Embodiment 1 of the present disclosure.
FIG. 11 is a structural schematic view of one side of a battery cell of Embodiment 2 of the present disclosure.
FIG. 12 is a structural schematic view of another side of the battery cell of Embodiment 2 of the present disclosure.

### DESCRIPTION OF THE EMBODIMENTS

The following provides a preferred embodiment, and in conjunction with the accompanying drawings, a more clear and complete description of the present disclosure.

### Embodiment 1

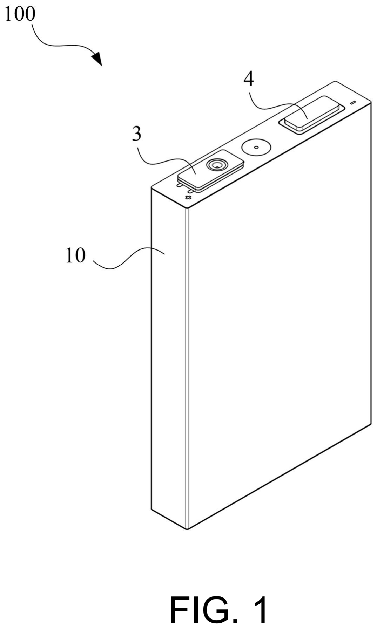

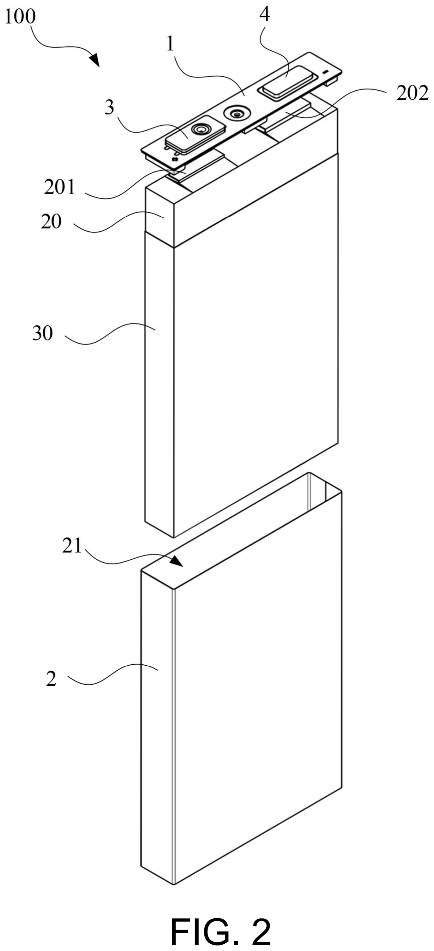

As shown in FIG. 1 and FIG. 2, the present disclosure provides a housing 10 of a battery cell 100. The housing 10 includes a top cover 1 and a side housing 2. One end of the side housing 2 is open to form an opening 21, and the other end thereof is sealed. The top cover 1 seals the opening 21 of the side housing 2 to form an accommodating space for accommodating an electrode assembly 20 of the battery cell 100. A positive terminal 3 and a negative terminal 4 are both disposed on the top cover 1 to lead out the positive electrodes and negative electrodes of the electrode assembly 20 (i.e., the top cover 1 in this embodiment is a housing body of the housing 10). An injection hole 15 is disposed between the positive terminal 3 and the negative terminal 4. An explosion-proof port is disposed at the bottom of the side housing 2 (not shown in the figure).

The specific structure of the battery cell 100 is described as follows. As shown in FIG. 2, the battery cell 100 includes the aforementioned housing 10, the electrode assembly 20, and an insulation sheet 30. The insulation sheet 30 wraps the exterior of the electrode assembly 20, and is disposed together with the electrode assembly 20 within the accommodating space of the housing 10. A positive electrode tab 201 and a negative electrode tab 202 of the electrode assembly 20 are respectively led outward through the positive terminal 3 and the negative terminal 4 located on the housing body of the housing 10, and are connected with electrical connection components external to the battery cell 100 through the positive terminal 3 and the negative terminal 4 to supply power outward.

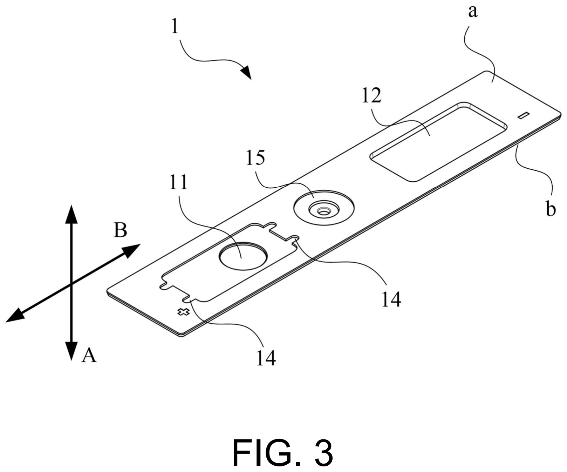

Specifically, as shown in FIG. 3, in this embodiment, the top cover 1 is provided with a through hole 11, the material of the top cover 1 is steel, and a thickness direction of the top cover 1 is a first direction A. In the first direction A, the top cover 1 includes a first side a and a second side b opposite to each other. A side of the top cover 1 away from the electrode assembly 20 is the first side a, while a side close to the electrode assembly 20 is the second side b. The top cover 1 of the housing 10 of the battery cell 100 adopts steel material to replace aluminum alloy, which may ensure structural strength under the premise of reduced thickness, thereby improving the space utilization inside the housing 10 of the battery cell 100 composed of the top cover 1, and increasing the energy density of the obtained battery cell 100. Meanwhile, in this embodiment, the material of the side housing 2 connected with the top cover 1 is also steel, so as to facilitate the welding of the top cover 1 and the side housing 2. In the meantime, the side housing 2 adopting steel material may also ensure structural strength under the premise of reduced thickness, thereby enhancing the space utilization inside the housing 10.

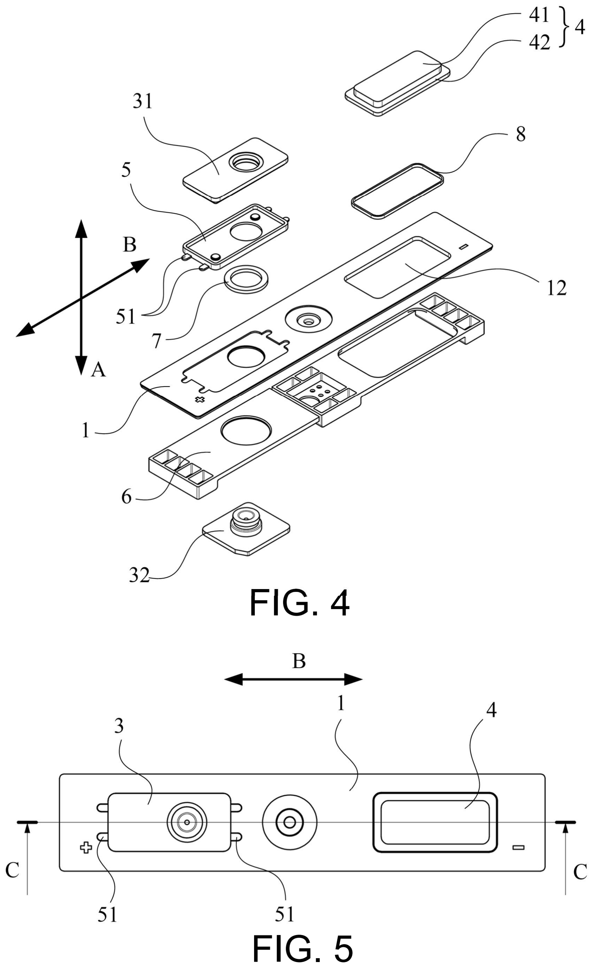

As shown in FIG. 4, the positive terminal 3 passes through the through hole 11 of the top cover 1, and an upper insulation member 5 is disposed between the positive terminal 3 and the first side a of the top cover 1, so that the positive terminal 3 is insulated from the housing body. The negative terminal 4 includes a first terminal layer 41 and a second terminal layer 42 disposed along the first direction A. The first terminal layer 41 and the second terminal layer 42 are electrically connected. The second terminal layer 42 is electrically connected with the first side a. The material of the second terminal layer 42 is steel, and the material of the first terminal layer 41 is different from the second terminal layer 42.

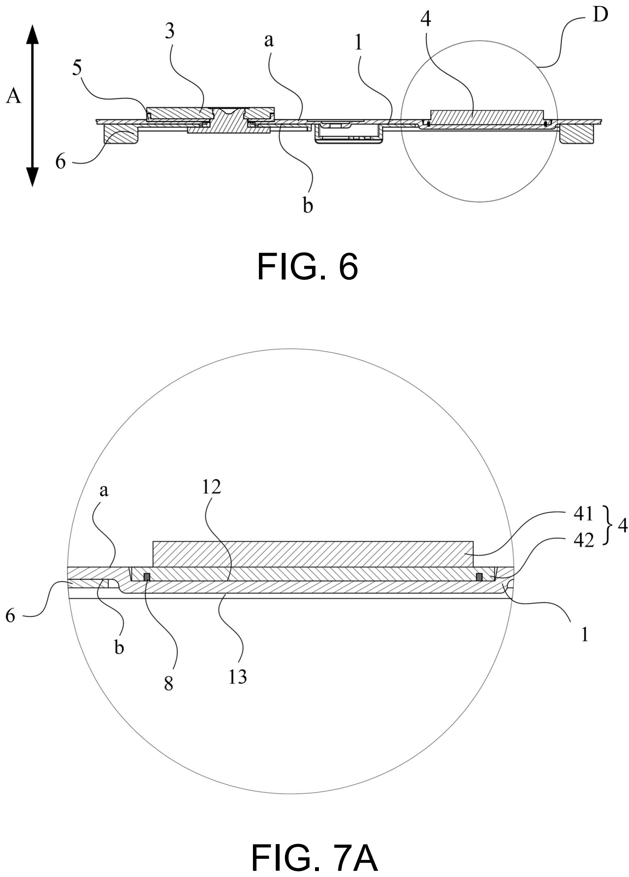

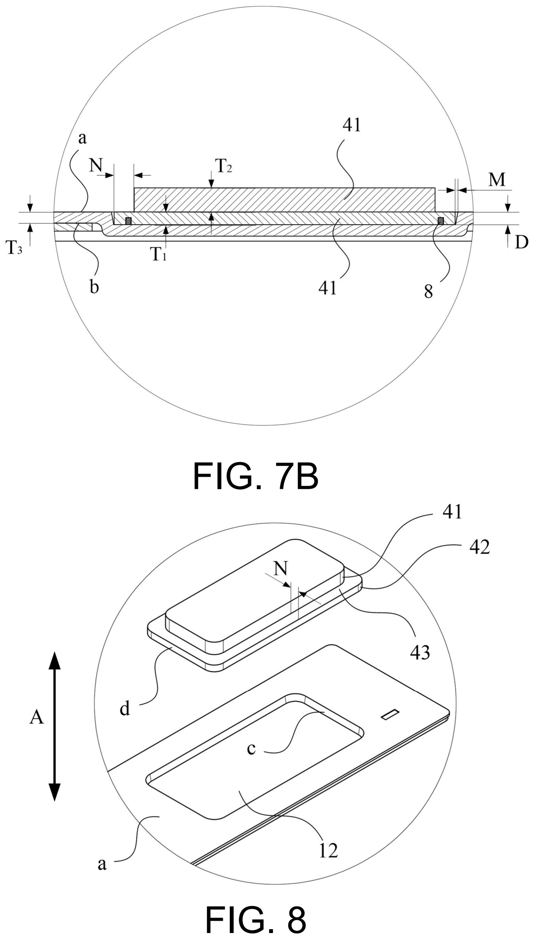

As shown in FIG. 7A and FIG. 8, the negative terminal 4 of the housing 10 includes two parts: the first terminal layer 41 and the second terminal layer 42. The second terminal layer 42 is made of steel and electrically connected with the first side a of the top cover 1, while the first terminal layer 41 is made of a material different from the second terminal layer 42 and is configured for connecting with external electrical connection components. The negative electrode tab 202 of the electrode assembly 20 of the battery cell 100 accommodated in the top cover 1 is led outward through the second side b of the top cover 1, the second terminal layer 42 and the first terminal layer 41 of the negative terminal 4. This structural setting method may reduce the required components of the housing 10 of the battery cell 100, simplify the structure, and reduce production and assembly costs. Also, the top cover 1 with steel material is negatively charged, which may prevent the housing body from rusting.

Specifically in this embodiment, the material of the first terminal layer 41 is aluminum alloy to adapt to aluminum external electrical connection components, and reliably connect with the external electrical connection components through welding method. In other embodiments, the material of the first terminal layer 41 may be correspondingly adjusted according to the material of the external electrical connection components. In addition, in this embodiment, the first terminal layer 41 and the second terminal layer 42 are connected through metal composite method. Of course, in other embodiments, the first terminal layer 41 and the second terminal layer 42 may also be connected through other methods existing in the related art, such as riveting or welding, etc. Moreover, in this embodiment, the materials of the top cover 1 and the second terminal layer 42 of the negative terminal 4 are both 304 stainless steel to obtain a relatively better structural strength and be more corrosion-resistant, so that the service durability may be significantly enhanced.

As shown in FIG. 3, FIG. 6 and FIG. 7A, the first side a of the top cover 1 has a recessed portion 12 formed by recessing toward the second side b, and the second terminal layer 42 is accommodated in the recessed portion 12. By setting the recessed portion 12 that may accommodate the second terminal layer 42 on the surface where the top cover 1 is electrically connected with the second terminal layer 42, on one hand, the recessed structure of the recessed portion 12 may be used to position the second terminal layer 42, and may also wrap the second terminal layer 42 to increase the connection strength between the negative terminal 4 including the second terminal layer 42 and the top cover 1, on the other hand, it is also possible to reduce the space occupied by the negative terminal 4 including the second terminal layer 42 on the first side a of the top cover 1, thus further enhancing the space utilization of the battery cell 100. Specifically in this embodiment, the recessed portion 12 may accommodate the entire second terminal layer 42 of the negative terminal 4, so that on the first side a of the top cover 1, the surface of the second terminal layer 42 is coplanar with the surface of the top cover 1, facilitating clamping and positioning during the welding process. In other embodiments, the depth of the recessed portion 12 may also be disposed to only accommodate a portion of the second terminal layer 42, so that the surface of the second terminal layer 42 relatively protrudes from the first side a. Additionally, in this embodiment, the surface of the first terminal layer 41 protrudes from the surface of the top cover 1, facilitating welding with external electrical connection components through an outer surface of the first terminal layer 41.

Additionally, as shown in FIG. 7A, corresponding to the position of the recessed portion 12 on the first side a of the top cover 1, the top cover 1 has a protrusion portion 13 on the second side b. That is, while the recessed portion 12 is processed on the outer side (first side a) of the top cover 1, the protrusion portion 13 is formed on the opposite surface of the top cover 1 for electrical connection with the negative electrode tab 202 of the electrode assembly 20. Moreover, a surface that protrudes more relative to other surfaces of the top cover 1 also facilitates connection with the negative electrode tab 202. The protrusion portion 13 may be formed when the recessed portion 12 is processed on the surface of the top cover 1 through stamping or other methods. That is, protrusions and recesses are simultaneously formed on both side surfaces of the top cover 1 through stamping process, which may reduce processing difficulty. The protrusion portion 13 is used for connection with the negative electrode tab 202 of the electrode assembly 20, and the recessed portion 12 is used for accommodation and positioning.

As shown in FIG. 6, in this embodiment, on the first side a of the top cover 1, both the positive terminal 3 and the negative terminal 4 protrude from the first side a to facilitate welding with external electrical connection components. Since the negative terminal 4 is formed by composite of the first terminal layer 41 and the second terminal layer 42 with different materials, and most of the second terminal layer 42 is located within the recessed portion 12 of the top cover 1, the positive terminal 3 is slightly higher than the first terminal layer 41 of the negative terminal 4. In other embodiments, the height of the positive terminal 3 may be made equal to the height of the first terminal layer 41 of the negative terminal 4 by increasing a thickness of the negative terminal 4 or reducing a thickness of the positive terminal 3, so as to facilitate connection with external electrical connection components.

Additionally, in this embodiment, on the second side b of the top cover 1, the protrusion portion 13 of the top cover 1 and the positive terminal 3 both protrude from the second side b to facilitate electrical connection with the positive electrode tab 201 and the negative electrode tab 202 of the electrode assembly 20. Since the protrusion portion 13 electrically connected with the negative electrode tab 202 in this embodiment is formed by stamping method, considering a thickness and machinability of the top cover 1, the protrusion portion 13 cannot protrude like the positive terminal 3. Therefore, the positive terminal 3 is slightly higher than the protrusion portion 13 of the top cover 1. In other embodiments, the protrusion portion 13 may be made to protrude more relative to the second side b of the top cover 1 by changing the processing technology, making the protrusion portion 13 and the positive terminal 3 have the same height to more facilitate electrical connection with the positive electrode tab 201 and the negative electrode tab 202 of the electrode assembly 20.

As shown in FIG. 7B, a recess depth of the recessed portion 12 is D, and the recess depth D should be greater than or equal to half of the thickness of the top cover 1 to ensure that the recessed portion 12 has a sufficient depth for accommodating and positioning the second terminal layer 42, thereby further improving the positioning accuracy of the second terminal layer 42, as well as the strength of connection with the second terminal layer 42. Moreover, since the top cover 1 is made of steel material, the structure strength of the top cover 1 is relatively high, processing deeper recessed portions on the surface of the top cover 1 will not affect the dimensional accuracy and surface flatness of the housing body.

Additionally, the recess depth D should be greater than or equal to 0.8mm, so that it is possible to prevent the occurrence of insufficient penetration depth and inadequate welding strength when the second terminal layer 42 of a negative electrode terminal is connected to the top cover 1 through welding methods such as laser welding, due to the recess being too shallow. Meanwhile, the recess depth D of the recessed portion 12 should be less than or equal to 2mm, so that it is possible to prevent the strength from reducing at a rounded connection formed by material extension deformation between the recessed portion 12 and the non-recessed portion of the top cover 1 due to the recessed portion being too deep, thus improving the machinability and manufacturability.

As shown in FIG. 8, there is a gap between an inner peripheral side surface c of the recessed portion 12 of the top cover 1 and an outer peripheral side surface d of the second terminal layer 42 of the negative terminal 4 after assembly (see FIG. 7B), so as to facilitate disposing the negative terminal 4 in the recessed portion 12 of the top cover 1. A preferred dimension selection range for the gap M is: 0.1mm≤M≤0.2mm. The gap M should be less than or equal to 0.2mm to avoid the gap being too large and affecting the positioning of the second terminal layer 42 by the recessed portion 12. Meanwhile, the gap M should be greater than or equal to 0.1mm to avoid the gap being too small and affecting the pre-configuration of the second terminal layer 42 relative to the recessed portion 12.

As shown in FIG. 7B, there are also relatively preferred dimensional selection ranges for other dimensional parameters of the top cover 1 of the housing 10. A thickness of the second terminal layer 42 of the negative terminal 4 is T₁, and the preferred dimensional selection range for the thickness T₁ is 0.6mm≤T₁≤1mm; a thickness of the first terminal layer 41 of the negative terminal 4 is T₂, and the preferred dimensional selection range for the thickness T₂ is 0.6mm≤T₂≤1mm; the thickness of the top cover 1 is T₃, and the preferred dimensional selection range for the thickness T₃ is 0.8mm≤T₃≤1.2mm. Making the thickness of the top cover 1 greater than or equal to 0.8mm may avoid thickness being too thin and affecting strength. Meanwhile, the thickness of the top cover 1 is less than or equal to 1.2mm to maximize weight reduction and cost reduction while strength requirements are met.

As shown in FIG. 7A and FIG. 8, along the first direction A, a surface projection of the first terminal layer 41 of the negative terminal 4 on the second terminal layer 42 is located within a range of the second terminal layer 42, such that a portion of the second terminal layer 42 is not covered by the first terminal layer 41, thereby enabling laser penetration welding to be performed on a portion of the surface of the second terminal layer 42 that is not covered by the first terminal layer 41, such that the second terminal layer 42 and the top cover 1 achieve welding connection through laser penetration welding. Compared with other welding methods, laser penetration welding may realize a higher connection strength.

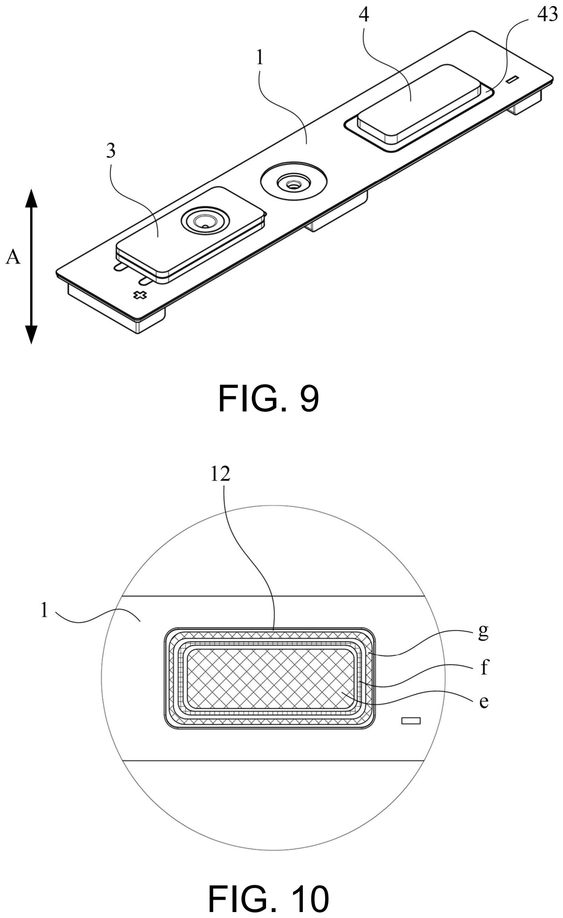

Specifically, as shown in FIG. 8 and FIG. 9, in this embodiment, a region where a projection of the second terminal layer 42 is not covered by a projection of the first terminal layer 41 is an annular region 43 disposed along an edge of the projection of the second terminal layer 42. That is, the first terminal layer 41 covers a central region of the surface of the second terminal layer 42. A peripheral edge region of the second terminal layer 42 is not covered by the first terminal layer 41, and the uncovered annular region 43 is used for laser penetration welding to perform welding, so as to pass through the interior of the second terminal layer 42 to achieve a reliable connection with the top cover 1. Under this structural setting method, the first terminal layer 41 has a complete and large area to perform welding with external point connection components, thus improving electrical connection reliability.

As shown in FIG. 7B and FIG. 8, a width N of the annular region 43 on the second terminal layer 42 that is not covered by the first terminal layer 41 should be disposed within a reasonable range. A minimum width dimension Nmin of the annular region 43 should be greater than or equal to 0.4mm to avoid the width dimension of the annular region 43 being too small to provide a sufficient space for laser penetration welding. Meanwhile, the maximum width dimension Nmax of the annular region 43 should be less than or equal to 0.8mm to avoid the width dimension of the annular region 43 being too large and causing the area dimension of the first terminal layer 41 to be too small, affecting welding with external electrical connection components.

As shown in FIG. 2, since the material of the top cover 1 is steel, the thickness T₃ of the top cover 1 is thinner relative to schemes adopting other materials such as aluminum alloy, with a typical value range of 0.8mm≤T₃≤1.2mm. Therefore, when the negative electrode tab 202 of the electrode assembly 20 is welded with the second side b of the top cover 1, there is a possibility of welding through the top cover 1, causing the first side a and the second side b of the top cover 1 to be penetrated through. In this case, after the defect top cover 1 is assembled into the battery cell 100 and an electrolyte is injected therein, the electrolyte inside the battery cell 100 may leak from the second side b to the first side a of the top cover 1.

To address the above problem, in this embodiment, as shown in FIG. 4 and FIG. 7A, the housing 10 further includes an annular sealing member 8. The annular sealing member 8 is fixed between the first side a of the top cover 1 and the second terminal layer 42 of the negative terminal 4, and the annular sealing member 8 is clamped and fixed through the connection of the second terminal layer 42 with the top cover 1. In this case, as long as a welding region of the second side b of the top cover 1 with the negative electrode tab 202 of the electrode assembly 20 is located within a range surrounded by the annular sealing member 8, even if the top cover 1 is welded through during the welding process, after the electrolyte leaks to the first side a of the top cover 1, the electrolyte is also located within the range surrounded by the annular sealing member 8 and cannot leak further.

Specifically as shown in FIG. 10, a sealing range of the annular sealing member 8 on the first side a of the top cover 1 is f, and a projection region of the welding region between the negative electrode tab 202 of the electrode assembly and the second side b of the top cover 1 projected to the first side a of the top cover 1 is a projection region e. As may be seen from FIG. 10, on the surface of the top cover 1, the projection region e is located within the sealing range f, even if the top cover 1 is welded through, the leaked electrolyte will also be restricted to the inside of the sealing range f where the annular sealing member 8 is located, and cannot continue to leak further.

In the meantime, when the second terminal layer 42 of the negative terminal 4 is welded with the first side a of the top cover 1, there is a possibility of welding through the second terminal layer 42, causing the electrolyte located at the first side a of the top cover 1 to continue leaking further through the welded-through second terminal layer 42. Therefore, in this embodiment, as shown in FIG. 10, a welding region between the second terminal layer 42 of the negative terminal 4 and the top cover 1 at the first side a is a welding region g, the welding region g is located outside the sealing range f of the annular sealing member 8. That is, the welding region between the second terminal layer 42 and the top cover 1 is located at the outer side of the annular sealing member 8. In this way, by setting the annular sealing member 8, it is possible to separate the welding region g of the negative terminal 4 relative to the top cover 1 at the first side a from the projection region e corresponding to the welding region of the negative electrode tab 202 relative to the top cover 1 at the first side a, thus avoiding the electrolyte from continuing to leak further through the welded-through second terminal layer 42.

As shown in FIG. 7A, in this embodiment, by setting a sealing groove 44 on a surface of the second terminal layer 42 of the negative terminal 4 facing the first side a of the top cover 1 for accommodating the annular sealing member 8, it is possible to achieve pre-positioning of the annular sealing member 8 before the negative terminal 4 and the top cover 1 are completely welded, thereby improving the sealing effect. Of course, in other embodiments, the sealing groove 44 may also be disposed on the first side a of the top cover 1, or the sealing groove 44 may be disposed simultaneously on both the top cover 1 and the second terminal layer 42 of the negative terminal 4 for accommodating the annular sealing member 8.

As shown in FIG. 4, in this embodiment, the positive terminal 3 includes two parts: a positive rivet block 31 located on the first side a of the top cover 1 and a positive electrode terminal 32 located on the second side b of the top cover 1. A lower surface of the positive electrode terminal 32 is used for electrically connecting with the positive electrode tab 201 of the electrode assembly 20. An upper end of the positive electrode terminal 32 extends through the through hole 11 of the top cover 1 and connects with the positive rivet block 31 by a rivet method. Additionally, the upper insulation member 5 is disposed between the positive rivet block 31 and the top cover 1 to achieve insulation between the positive rivet block 31 and the top cover 1, thereby avoiding short circuit. A lower insulation member 6 is disposed between the positive electrode terminal 32 and the top cover 1 to achieve insulation between the positive electrode terminal 32 and the top cover 1, thereby avoiding short circuit. A sealing ring 7 is fitted on an electrode terminal surface of the positive electrode terminal 32, and an outer surface of the sealing ring 7 contacts and seals the through hole 11 of the top cover 1 to avoid the electrolyte leaking from the second side b of the top cover 1 through the through hole 11.

As shown in FIG. 9, in the first direction A, both the positive terminal 3 and the negative terminal 4 have rectangular shapes, and rounded corners are disposed at the four corners of the positive terminal 3 and the negative terminal 4.

To achieve anti-rotation of the positive terminal 3, as shown in FIG. 4, recesses are disposed at positions corresponding to an upper insulation member 5 and the positive rivet block 31 on the first side a of the top cover 1, so as to accommodate the upper insulation member 5 and the positive rivet block 31 and avoid rotation of the positive rivet block 31. However, since the top cover 1 is made of steel, the thickness thereof may be thinner relative to aluminum alloy material, the recesses that are too deep cannot be disposed on the top cover 1 to accommodate the upper insulation member 5 and the positive rivet block 31, resulting in limited anti-rotation capability. Therefore, in a second direction B perpendicular to the first direction A, the upper insulation member 5 has a positioning portion 51 that protrudes outward, while a surface of the first side a of the top cover 1 has an accommodating portion 14 that corresponds to and fits the positioning portion 51. By setting the additionally protruding positioning portion 51 on the upper insulation member 5 within the accommodating portion 14 on the first side a of the top cover 1, the anti-rotation capability is improved by providing an additional contact area. Of course, in other embodiments, the positioning portion 51 that protrudes outward may also be disposed on the surface of the first side a of the top cover 1, with a corresponding accommodating portion 14 disposed on the upper insulation member 5, to similarly achieve the purpose of enhancing the anti-rotation effect.

As shown in FIG. 1 and FIG. 2, the present disclosure provides a battery cell 100 including the above housing 10. By adopting steel material to replace aluminum alloy as the material used for the top cover 1 and the side housing 2, the structural strength may be ensured under the premise of reduced thickness, the space utilization in the housing 10 may be improved, and the energy density of the battery cell 100 may be increased. Meanwhile, the negative electrode of the electrode assembly 20 of the battery cell 100 is led outward through the top cover 1, the second terminal layer 42 and the first terminal layer 41 of the negative terminal 4, which may reduce the components required for the battery cell 100, simplify the structure, and reduce production and assembly costs. In addition, the top cover 1 and the side housing 2 are negatively charged due to connection with the negative electrode tab 202 of the electrode assembly 20, which may avoid rusting.

### Embodiment 2

The present embodiment provides a housing 10 of the battery cell 100. The structure of the housing 10 is substantially the same as the structure of the housing 10 provided in Embodiment 1, with the difference being that, in this embodiment, the housing 10 includes two top covers 1, and the positive terminal 3 and the negative terminal 4 are respectively disposed on the two top covers 1 (i.e., both top covers 1 in this embodiment are housing bodies of the housing 10).

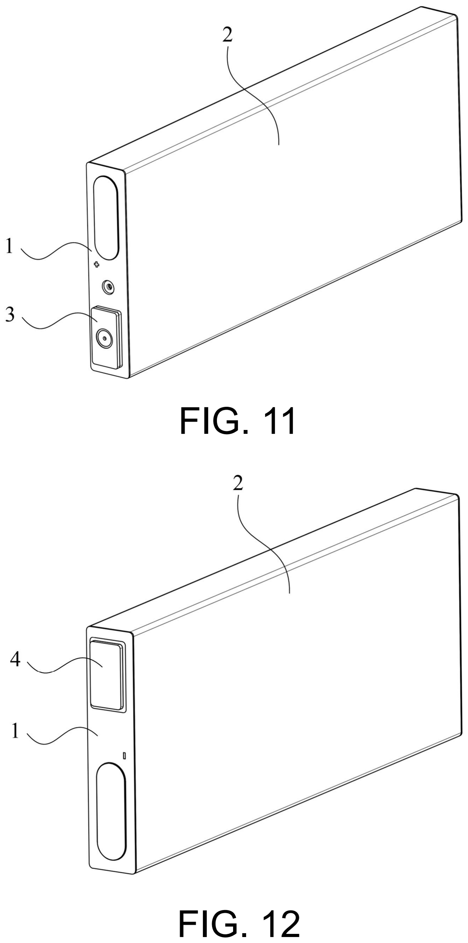

As shown in FIG. 11 and FIG. 12, two openings 21 are formed by passing through both sides of the side housing 2 of the housing 10, and the two top covers 1 respectively seal the openings 20 on both sides of the side housing 2 to form a space for accommodating the electrode assembly 20. As shown in FIG. 11, the positive terminal 3 is disposed on one top cover 1, and the structure setting method for the positive terminal 3 is the same as Embodiment 1. As shown in FIG. 12, the negative terminal 4 is disposed on the other top cover 1, and the structure setting method for the negative terminal 4 is the same as Embodiment 1, so that the top cover 1 is negatively charged.

### Embodiment 3

The present embodiment provides a housing 10 for the battery cell 100. The structure of the housing 10 is substantially the same as the structure of the housing 10 provided in Embodiment 1, with the difference being that, in this embodiment, the housing 10 includes the top cover 1 and the side housing 2, one end of the side housing 2 is open to form the opening 21, the other end is sealed, and the top cover 1 seals the opening 21 of the side housing 2 to form a space for accommodating the electrode assembly 20. The positive terminal 3 is disposed on the side housing 2, and the negative terminal 4 is disposed on the top cover 1 (i.e., both the side housing 2 and the top cover 1 in this embodiment are housing bodies of the housing 10). By having the negative electrode tab 202 of the electrode assembly 20 lead outward through the second side b of the top cover 1, the second terminal layer 42 and the first terminal layer 41 of the negative terminal 4, the top cover 1 is made to be negatively charged.

### Embodiment 4

The present embodiment provides a housing 10 for the battery cell 100. The structure of the housing 10 is substantially the same as the structure of the housing 10 provided in Embodiment 1, with the difference being that, in this embodiment, the housing 10 includes the top cover 1 and the side housing 2, one end of the side housing 2 is open to form the opening 21, the other end is sealed, and the top cover 1 seals the opening 21 of the side housing 2 to form a space for accommodating the electrode assembly 20. The positive terminal 3 is disposed on the top cover 1, while the negative terminal 4 is disposed on the side housing 2 (i.e., both the side housing 2 and the top cover 1 in this embodiment are housing bodies of the housing 10). Therefore, in this embodiment, the negative electrode tab 202 of the electrode assembly 20 is led outward through the side housing 2, the second terminal layer 42 and the first terminal layer 41 of the negative terminal 4, making the side housing 2 negatively charged.

### Embodiment 5

The present embodiment provides a housing 10 for the battery cell 100. The structure of the housing 10 is substantially the same as the structure of the housing 10 provided in Embodiment 1, with the difference being that, in this embodiment, the housing 10 includes the top cover 1 and the side housing 2, one end of the side housing 2 is open to form the opening 21, the other end is sealed, and the top cover 1 seals the opening 21 of the side housing 2 to form a space for accommodating the electrode assembly 20. Both the positive terminal 3 and the negative terminal 4 are disposed on the side housing (i.e., the side housing 2 in this embodiment is the housing body of the housing 10). Therefore, in this embodiment, the negative electrode tab 202 of the electrode assembly 20 is led outward through the side housing 2, the second terminal layer 42 and the first terminal layer 41 of the negative terminal 4, making the side housing 2 negatively charged.

Of course, in other embodiments, the positive terminal 3 and the negative terminal 4 may be disposed on any component of the housing 10 such as the top cover 1 or the side housing 2 according to actual needs, so that the positive electrode tab 201 of the electrode assembly 20 is led outward through the positive terminal 3 insulated from the housing 10, while the negative electrode tab 202 is led outward through the housing 10 and the negative terminal 4 in sequence, and the specific setting positions of the positive terminal 3 and the negative terminal 4 may be disposed according to actual design requirements.

## Claims

1. A housing (10) of a battery cell (100), comprising:
a housing body, having a through hole (11), wherein a material of the housing body is steel, a thickness direction of the housing body is a first direction (A), in the first direction (A), the housing body comprises a first side (a) and a second side (b) opposite to each other;
a positive terminal (3), passing through the through hole (11);
an upper insulation member (5), disposed between the positive terminal (3) and the housing body to insulate the positive terminal (3) from the housing body; and
a negative terminal (4), comprising a first terminal layer (41) and a second terminal layer (42) disposed along the first direction (A), wherein the first terminal layer (41) and the second terminal layer (42) are electrically connected, the second terminal layer (42) is electrically connected with the first side (a), a material of the second terminal layer (42) is steel, a material of the first terminal layer (41) is different from the second terminal layer (42).

2. The housing (10) of the battery cell (100) according to claim 1, wherein the first side (a) has a recessed portion (12) formed by recessing toward the second side (b), and at least a portion of the second terminal layer (42) is accommodated in the recessed portion (12).

3. The housing (10) of the battery cell (100) according to claim 2, wherein a recess depth of the recessed portion (12) is greater than or equal to half of a thickness of the housing body; and/or,
a recess depth of the recessed portion (12) is D, and 0.8mm≤D≤2mm.

4. The housing (10) of the battery cell (100) according to claim 2, wherein the second side (b) has a protrusion portion (13) corresponding to a position of the recessed portion (12).

5. The housing (10) of the battery cell (100) according to claim 4, wherein the positive terminal (3) and the negative terminal (4) are both disposed on the first side (a) of the housing body, and on the second side (b), the protrusion portion (13) has a same height as the positive terminal (3).

6. The housing (10) of the battery cell (100) according to claim 2, wherein a gap is provided between an inner peripheral side surface (c) of the recessed portion (12) and an outer peripheral side surface (d) of the second terminal layer (42), the gap has a dimension of M, and 0.1mm≤M≤0.2mm; and/or,
on the first side (a), a surface of the second terminal layer (42) is coplanar with a surface of the housing body; and/or,
on the first side (a), a surface of the first terminal layer (41) protrudes from the surface of the housing body.

7. The housing (10) of the battery cell (100) according to claim 1, wherein along the first direction (A), a projection of the first terminal layer (41) on a surface of the second terminal layer (42) is located within a range of the second terminal layer (42).

8. The housing (10) of the battery cell (100) according to claim 7, wherein along the first direction (A), a region where a projection of the second terminal layer (42) is not covered by a projection of the first terminal layer (41) is an annular region (43) disposed along an edge of the projection of the second terminal layer (42).

9. The housing (10) of the battery cell (100) according to claim 8, wherein a minimum width dimension of the annular region (43) is Nmin, Nmin≥0.4mm; and/or,
a maximum width dimension of the annular region (43) is Nmax, Nmax≤0.8mm.

10. The housing (10) of the battery cell (100) according to claim 1, wherein the housing (10) further comprises an annular sealing member (8), the annular sealing member (8) is fixed between the second terminal layer (42) and the first side (a) of the housing body.

11. The housing (10) of the battery cell (100) according to claim 10, wherein a welding region between the second terminal layer (42) and the housing body is located outside the annular sealing member (8).

12. The housing (10) of the battery cell (100) according to claim 11, wherein a surface of the second terminal layer (42) facing the first side (a) and/or the first side (a) further has a sealing groove (44) for accommodating the annular sealing member (8).

13. The housing (10) of the battery cell (100) according to any one of claims 1-12, wherein in a second direction (B) perpendicular to the first direction (A), one of the upper insulation member (5) and the housing body has a positioning portion (51) that protrudes outward, and the other has an accommodating portion (14) that corresponds to and fits the positioning portion (51); and/or,
the housing body comprises a top cover (1) and a side housing (2), the top cover (1) is electrically connected with an opening (21) of the side housing (2), and together enclose to form an accommodating space; and/or,
the materials of the housing body and the second terminal layer (42) are both 304 stainless steel; and/or,
in the first direction (A), the negative terminal (4) has a rectangular shape, and rounded corners are disposed at four corners of the negative terminal (4); and/or,
on the first side (a), the positive terminal (3) has a same height as the first terminal layer (41); and/or,
a thickness of the second terminal layer (42) is T₁, 0.6mm≤T₁≤1mm; and/or,
a thickness of the first terminal layer (41) is T₂, 0.6mm≤T₂≤1mm; and/or,
a thickness of the housing body is T₃, 0.8mm≤T₃≤1.2mm.

14. A battery cell (100), comprising:
the housing (10) of the battery cell (100) according to any one of claims 1-13.
